# EUROPEAN PATENT SPECIFICATION

(11) **EP 3 997 802 B1**
(45) Date of publication and mention of the grant of the patent: **22.04.2026**
(21) Application number: 19938082.5
(22) Date of filing: 12.07.2019
(51) Int. Cl.: H04B 7/06, H04L 27/26

(54) **SYSTEMS AND METHODS FOR BEAMFORMING**
SYSTEME UND VERFAHREN ZUR STRAHLFORMUNG
SYSTÈMES ET PROCÉDÉS DE FORMATION DE FAISCEAUX

(43) Date of publication of application: 18.05.2022
(73) Proprietor: Huawei Technologies Co., Ltd., Longgang District Shenzhen, Guangdong 518129 (CN)
(72) Inventor: TSODIK, Genadiy, 80992 Munich (DE); SHILO, Shimon, 80992 Munich (DE); EZRI, Doron, 80992 Munich (DE); REDLICH, Oded, 80992 Munich (DE); YU, Jian, 80992 Munich (DE)
(74) Representative: Grünecker Patent- und Rechtsanwälte PartG mbB
(86) International application number: PCT/CN2019/095792
(87) International publication number: WO 2021/007708

(56) References cited:
- WO-A1-2018/082676
- WO-A1-2018/216989
- WO-A2-2013/022321
- US-A1- 2013 058 239
- US-A1- 2016 353 294
- NIR SHAPIRA (CELENO): "Channel Dimension Reduction in MU Operation ; 11-10-0803-00-00ac-channel-dimension-reduction-in-mu-operation", IEEE DRAFT; 11-10-0803-00-00AC-CHANNEL-DIMENSION-REDUCTION-IN-MU-OPERATION, IEEE-SA MENTOR, PISCATAWAY, NJ USA, vol. 802.11ac, 13 July 2010 (2010-07-13), pages 1 - 23, XP017676609

## Description

### BACKGROUND

The present invention, in some embodiments thereof, relates to wireless communication and, more specifically, but not exclusively, to systems and methods for beamforming for wireless communication.

A beamforming precoder is defined in recent WiFi standard. The beamformer transmits an announcement on an NDP (null data packet) message to the beamformee, and then transmits an NDP to the beamformee, which is used by the beamformee for precoder calculation. The beamformee transmits a feedback to the beamformer that includes a compressed version of the precoder matrices. In 802.11ax the feedback transmission may be triggered by the beamformer using a special Trigger Frame.

Document US 2013/0058239 A1 provides a method of sounding and feedback with channel quality information and reduced overhead. A receiving station receives a sounding signal transmitted from an access point over multiple sub-channels of a wide channel in a wireless network. The receiving station detects channel quality based on the received sounding signal for each sub-channel. The receiving station then performs channel estimation based on the received sounding signal and thereby determining feedback information. Finally, the receiving station transmits a feedback message to the access point, the feedback message contains NULL feedback information, reduced feedback information, or channel integrity/quality indicators based on the channel quality information for each sub-channel.

Document "Channel Dimension Reduction in MU Operation", IEEE 802.11-10/0803r0, by Nir Shapira et al., relates to channel dimension reduction as a means for the beamformer to reduce the dimensions of the channel matrix between beamformer and users. This document only relates to user-side dimension reduction, wherein dimension reduction can be done by removing user antennas (receive-chains) from the channel matrix.

### SUMMARY

It is an object of the present invention to provide an apparatus for computation of a feedback message to a beamforming device for computing a precoding dataset for mixed beamforming.

The foregoing and other objects are achieved by the features of the independent claim. Further implementation forms are apparent from the dependent claims, the description and the figures.

According to a first aspect, an apparatus for computation of a feedback message to a beamforming device for computing a precoding dataset for mixed beamforming a plurality of spatial streams for transmission by a plurality of transmitters, comprises: a processor configured to: receive plurality of narrowband precoder feedback messages, wherein the plurality of narrowband precoder feedback messages are computed based on a calibration message transmitted by the beamforming device over a wireless channel, the calibration message is analyzed to compute a parameter of a wideband precoder feedback message for a transmission bandwidth, and the plurality of narrowband precoder feedback messages are computed according to the parameter of the wideband precoder feedback message, select at least one data element from the plurality of narrowband precoder feedback messages for compression thereof using a first compression process that is different than a second compression process used for compression of non-selected data elements, generate a compressed plurality of narrowband precoder feedback messages by compressing the selected at least one data element with the first compression process and compressing the non-selected data elements with the second compression process, and provide the compressed plurality of narrowband precoder feedback messages and the wideband precoder feedback message for transmission to the beamforming device.

The narrowband precoder feedback size may be adjusted by reducing a number of bits that is used for compression of selected data elements, for example, rows of *V*_{NB} matrix (e.g., by reducing the number of bits and/or nulling).

The initial size of the narrowband precoder is maintained to be large, enabling selection of the data elements contribute less (e.g., statistically insignificant power levels), which enables the selected data elements to be compressed and provided to the beamforming device with relative less accuracy (in comparison to not compressing the selected data elements, and/or compressing the selected data elements using the second standard compression method) without degrading the performance. The data elements may be selected, for example, by examination of elements of each column of narrowband precoder matrix. The beamformee device may select the data elements (e.g., rows of the matrix) that are candidate to be reported differently of other elements, as described herein.

The compression of the selected data elements of the narrowband response messages by the apparatus improves efficiency of the response message transmitted from the beamformee to the beamforming device, without significant degradation in performance.

The apparatus improves the adjustment of the narrowband precoder feedback size to channel link conditions for wireless transmission. The adjustment may be iterated in real time, for real time adjustment to changing link conditions, for example, impacted by weather, interference from other signals, dynamic objects that block signals (e.g., trucks), and changing locations of the client terminals communicating with the precoding device, for example, mobile devices that are moved around by users.

The adjustment of the precoder is performed regardless of the size of the wideband precoder. The size of the narrowband precoder is updated per tone during the precoder calculation.

Inventors performed a computation evaluation that shows that in case of 16 transmitter antennas, *Nss =* 2 and K = 8, the apparatus leads to a 68% reduction of the total feedback size, while in comparison using a standard mixed beamforming approach the reduction is 55%.

In a further implementation form of the first aspect, each of the compressed plurality of narrowband precoder feedback messages includes a respective field indicating the respective compressed at least one data element, wherein the beamforming device reconstructs the plurality of narrowband precoder feedback messages by decompressing the respective compressed at least one data element defined by each respective field.

The new field indication in the feedback message may provide the data to enable decompression while reducing (e.g., minimal) degradation in the achievable gain.

In a further implementation form of the first aspect, a number of selected at least one data element is predefined for each of the compressed plurality of narrowband precoder feedback messages, and each respective field stores an indication of each one of the number of selected at least one data element for the respective compressed narrowband precoder feedback message.

In a further implementation form of the first aspect, a number of selected at least one data element is variable and selected by the processor for each of the compressed plurality of narrowband precoder feedback messages, and the respective field stores an indication of the selected number of at least one data element for the respective compressed narrowband precoder feedback message and an indication of each one of the selected at least one data element for each respective compressed narrowband precoder feedback message.

In a further implementation form of the first aspect, the respective field stores a bitmap denoting each respective selected number of at least one data element for each respective compressed narrowband precoder feedback message.

In a further implementation form of the first aspect, the processor is configured to select a respective first compression process for each narrowband precoder feedback message from a plurality of candidate first compression processes.

Selecting the compression scheme per tone (i.e., per narrowband precoder feedback message) may increase the gain of mixed beamforming without performance degradation. For example, the first compression scheme is selected according to current link conditions.

In a further implementation form of the first aspect, at least one of: each compressed plurality of narrowband precoder feedback messages transmitted to the beamforming device include an indication of the respective selected compression process, and each respective selected compression process is defined in the calibration message received from the beamforming device.

In a further implementation form of the first aspect, the selected at least one data element is compressed by removing each selected least one data element.

The removal of the select data elements reduces the size of the feed back message, by eliminating the bits that would otherwise be needed to store the selected data element(s).

In a further implementation form of the first aspect, the beamformer device reconstructs the plurality of narrowband precoder feedback messages from the compressed plurality of narrowband precoder feedback messages by adding null values for each removed at least one data element.

In a further implementation form of the first aspect, the processor is configured to compute a power level of each of data element of the plurality of narrowband precoder feedback messages, and the at least one data element is selected when the respective power level of the at least one data element is below a power level threshold.

Inventors performed a computational evaluation by examining the typical values of narrowband precoder matrix entries. Simulations of TGn-D channel model showed that more than 20% of entries of NB precoder matrix have a power below 0.01 (1% of total power). Based on these results the size of the feedback message may be reduced by about 20% with very small reduction in total power. The threshold may be adjusted to desired performance and indicated within the NDP procedure.

Inventors performed another computational evaluation by checking the difference in signal to noise ratio (SNR) between the original precoder and the precoder with nulled rows. K = 10 and power level threshold of 0.08 (8% of power) were selected, which result in an average of about 3.7 rows that are selected to be nulled. In 80% of the cases the SNR difference is below 60dB (Decibels), while in all the cases it is below 30dB, which means no degradation of the performance is expected.

In a further implementation form of the first aspect, the power level threshold is set as a percentage of total power.

In a further implementation form of the first aspect, the at least one data element is selected when the respective power level of the at least one data element is below a power level threshold and when a sum of power levels of a plurality of selected data elements is below a maximal power level threshold.

In a further implementation form of the first aspect, at least one of: a value of the power threshold and a value of the maximal power level threshold, is defined in the calibration message received from the beamforming device.

In a further implementation form of the first aspect, a maximal number of data elements selected for compression is at least one of: predefined and stored in a memory of the apparatus, and defined in the calibration message received from the beamforming device.

Selecting the maximal number of data elements for compression per tone (i.e., per narrowband precoder feedback message) may increase the gain of mixed beamforming without performance degradation
In a further implementation form of the first aspect, selecting comprises selecting at least one row of the matrix for compression.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic depicting dataflow based on a standard mixed beamforming approach, to help understand improvements of the standard approach provided in accordance with some embodiments of the present invention;
FIG. 2 is a graph of Packet error rate (PER) vs. signal to noise ratio (SNR) for different *K* values for a standard mixed beamforming approach, to help understand the tradeoffs in the standard mixed beamforming approach, to help understand some embodiments of the present invention;
FIG. 3 is a flowchart of a process for computation of a feedback message to a beamforming device for computing a precoding dataset for mixed beamforming multiple spatial streams for transmission by multiple transmitters, in accordance with some embodiments of the present invention;
FIG. 4 is a schematic of components of a system for computation of a feedback message to a beamforming device for computing a precoding dataset for mixed beamforming multiple spatial streams for transmission by multiple transmitters, in accordance with some embodiments of the present invention;
FIG. 5 is schematics of fields introduced into the narrowband precoder feedback messages provided to the beamforming device, in accordance with some embodiments of the present invention;
FIG. 6 is schematic depicting examples of values of parameters for compression of selected data elements, provided by the beamforming device for implementation by the beamformee device, in accordance with some embodiments of the present invention;
FIG. 7 is a dataflow diagram implementing the compression of selected data elements implemented within the standard mixed beamforming approach depicted with reference to FIG. 1, in accordance with some embodiments of the present invention;
FIG. 8 is a histogram of an absolute number of data elements versus a percentage of total power, useful for defining a threshold value for selection of data elements for compression thereof, in accordance with some embodiments of the present invention;
FIG. 9 is a depicting complementary cumulative distribution function (CCDF) of SNR differences between compression of data elements in accordance with some embodiments of the present invention, and the standard approach of mixed beamforming without compression of data elements;
FIG. 10 is a graph of the results of the SU-MIMO simulation, in accordance with some embodiments of the present invention;
FIG. 11 is a graph of the results of the MU-MIMO simulation, in accordance with some embodiments of the present invention; and
FIG. 12 is a table summarizing the gain results for the three simulated cases, in accordance with some embodiments of the present invention.

### DETAILED DESCRIPTION

The present invention, in some embodiments thereof, relates to wireless communication and, more specifically, but not exclusively, to systems and methods for beamforming for wireless communication.

An aspect of some embodiments of the present invention relates to systems, methods, apparatus, and/or code instructions (i.e., stored on a memory and executable by at least one hardware processor) relate to computation of a feedback message to a beamforming device, for computing a precoding dataset for mixed beamforming multiple spatial streams for transmission by multiple transmitters. Multiple narrowband precoder feedback messages are received, optionally by a beamformee device. The narrowband precoder feedback messages are computed based on a calibration message transmitted by the beamforming device over a wireless channel. The calibration message is analyzed to compute a parameter of a wideband precoder feedback message for a transmission bandwidth. The narrowband precoder feedback messages are computed according to the parameter of the wideband precoder feedback message. One or more data elements are selected from the narrowband precoder feedback messages (e.g., rows selected from a matrix) for compression thereof. The selected data elements are compressed using a first compression process that is different than a second compression process that may be used for compression of the non-selected data elements. The second compression process may be based on a defined standard protocol. Multiple compressed narrowband precoder feedback messages are generated by compressing the selected data element(s) with the first compression process and optionally compressing the non-selected data elements with the second compression process. The compressed narrowband precoder feedback messages and the wideband precoder feedback message are provided for transmission to the beamforming device. The beamforming device may decompress the compressed narrowband precoder feedback messages and the wideband precoder feedback message, and compute the precoding dataset for mixed beamforming the spatial streams for transmission by transmitters accordingly.

The initial size of the narrowband precoder is maintained to be large, enabling selection of the data elements contribute less (e.g., statistically insignificant power levels), which enables the selected data elements to be compressed and provided to the beamforming device with relative less accuracy (in comparison to not compressing the selected data elements, and/or compressing the selected data elements using the second standard compression method) without degrading the performance. The data elements may be selected, for example, by examination of elements of each column of narrowband precoder matrix. The beamformee device may select the data elements (e.g., rows of the matrix) that are candidate to be reported differently of other elements, as described herein.

The compression of the selected data elements of the narrowband response messages by the apparatus improves efficiency of the response message transmitted from the beamformee to the beamforming device, without significant degradation in performance.

The apparatus improves the adjustment of the narrowband precoder feedback size to channel link conditions for wireless transmission. The adjustment may be iterated in real time, for real time adjustment to changing link conditions, for example, impacted by weather, interference from other signals, dynamic objects that block signals (e.g., trucks), and changing locations of the client terminals communicating with the precoding device, for example, mobile devices that are moved around by users.

The adjustment of the precoder is performed regardless of the size of the wideband precoder. The size of the narrowband precoder is updated per tone during the precoder calculation.

As described in additional details in the "Examples" section, Inventors performed a computation evaluation that shows that in case of 16 transmitter antennas, *Nss =* 2 and K = 8, the apparatus leads to a 68% reduction of the total feedback size, while in comparison using a standard mixed beamforming approach the reduction is 55%.

At least some implementations of the systems, methods, apparatus, and/or code instructions described herein reduce the size of the feedback messages sent from the beamformee to the beamformer as part of the beamforming calibration process for wireless transmission of data in comparison to standard beamforming calibration process. The reduction in the size of the feedback messages is achieved while maintaining a target performance level, for example, without significant and/or noticeable degradation in performance, for example, without significant increase in packet error rate (PER) and/or without significant decrease in signal to noise ratio (SNR).

A brief discussion of mixed (e.g., hybrid) beamforming is now provided, to help understand at least some implementations of the systems, methods, apparatus, and/or code instructions described herein.

Mixed beamforming is being considered as an optional solution for next generation of WiFi. The main motivation to apply mixed beamforming is significant size reduction of feedback messages transmitted from the beamformee to the beamformer. However, the properties of mixed beamforming introduce a trade-off between performance and feedback size that cannot be resolved by predefined parameters of the standard mixed beamforming protocol. At least some implementations of the systems, methods, apparatus, and/or code instructions described herein provide an adjustable size of the feedback message while maintaining a transmission performance at a target level, i.e., the further reduction in size of the feedback message described herein does not significantly impact transmission performance in comparison to standard mixed beamforming approaches, as described herein in additional detail.

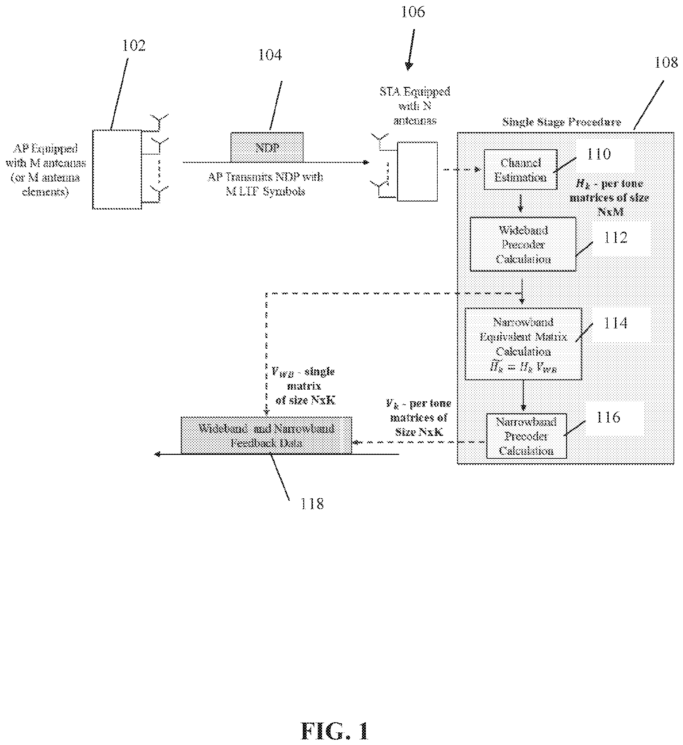

Reference is now made to FIG. 1, which is a schematic depicting dataflow based on a standard mixed beamforming approach, to help understand improvements of the standard approach provided in accordance with some embodiments of the present invention. Access point (AP) 102, which has *M* antennas and/or *M* antenna elements transmits a null data packet (NDP) 104 with *M* LFT symbols to a station (STA) 106 with N antennas. STA 106 is associated with a processor that computes a single state procedure 108 that includes: performing a channel estimation 110, performing a wideband precoder calculation 112, performing a narrowband (NB) equivalent matrix calculation 114, performing a narrowband (per-tone) precorder calculation 116, and provided a wideband and narrowband feedback data 118 to AP 102 that includes output of wideband precoder calculation 112 and output of narrowband precorder calculation 116.

The main principle of Mixed (Hybrid) Beamforming is to divide the per-tone precoder into two parts, wideband precoder calculation 112 and narrowband precorder calculation 116. Wideband precoder calculation 112 is a time-domain precoder (or precoders) for the entire bandwidth. Narrowband (per-tone) precorder calculation 116 is obtained from the equivalent channel produced by applying the wideband precoder on the original channel matrix.

For the case of *M* Tx antennas and *Nss* spatial streams as shown and referred to herein, the wideband precoder, denoted *V_{WB}* is of size *M* × *K.* The equivalent channel is denoted *H̃ⱼ* = *Hⱼ V_{WB}* of size *N* × *K.* The Compute narrowband precoder is denoted *V_{NB}* of size *K* × *N_{SS}.* Data elements for compression using the first compression process are selected from *V_{NB}.* The compressed feedback message provided for transmission to the beamforming device is denoted *Ṽ_{NB}*.

Both sizes of wideband and narrowband precoders are defined by a main unknown parameter denoted K. Proper selection of the K value has a direct impact on the feedback size and the performance.

Selecting the value of the K factor is an important issue in mixed/hybrid beamforming. The feedback size is mostly defined by the size of narrowband precoder however the performance strongly depends on the size of wideband precoder. Smaller K value leads to smaller feedback size, however "folding" the equivalent channel matrix leads to information loss and thus degrades the performance.

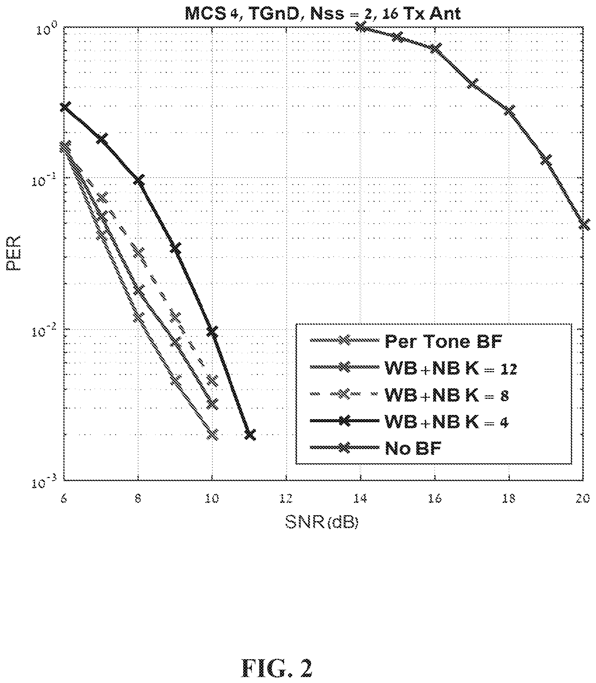

Reference is now made to FIG. 2, which is a graph of Packet error rate (PER) vs. signal to noise ratio (SNR) for different K values for a standard mixed beamforming approach, to help understand the tradeoffs in the standard mixed beamforming approach, to help understand some embodiments of the present invention. As seem in the graph, for larger *K* values a feedback size reduction of about 80% is achieved while performance degrades by more than 1dB.

The value selected for K has major impact on the performance, for example, in terms of PER and/or SNR. The same value of *K* is applied to wideband precoder calculation and also for narrowband precoder on the entire bandwidth (all subcarriers). There is a trade-off between the performance and feedback, and a predefined narrowband precoder size for all tones is not optimal. However, wideband precoder is negligible part of the total feedback and may be enlarged without reducing gain. At least some implementations of the systems, methods, apparatus, and/or code instructions described herein update the size of narrowband precoder per tone during precoder calculation, regardless of the size of wideband precoder, which provides better adjustment to current wireless link conditions.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

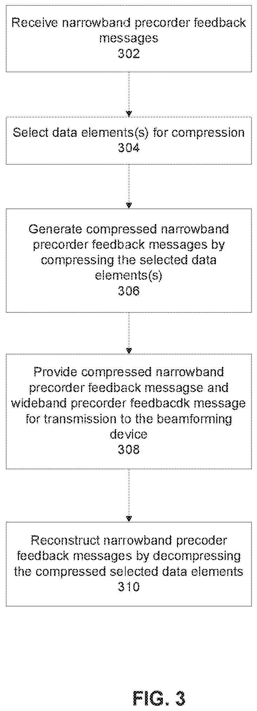

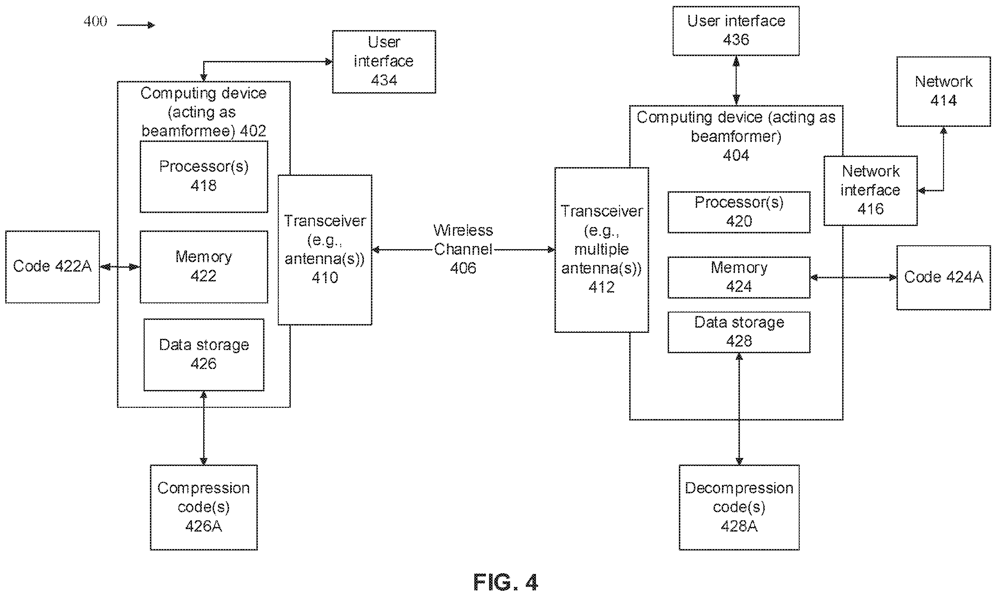

Reference is now made to FIG. 3, which is a flowchart of a process for computation of a feedback message to a beamforming device for computing a precoding dataset for mixed beamforming multiple spatial streams for transmission by multiple transmitters, in accordance with some embodiments of the present invention. Reference is also made to FIG. 4, which is a schematic of components of a system 400 for computation of a feedback message to a beamforming device for computing a precoding dataset for mixed beamforming multiple spatial streams for transmission by multiple transmitters, in accordance with some embodiments of the present invention.

System 400 includes computing devices 402 and 404 that transmit between one another over a wireless channel 406. For clarity and simplicity of explanation, computing device 404 is described as acting as a beam former, and computing device 402 is described as acting as a beamformee. It is understood that each computing device 402 and 404 may act as both beam former and beamformee, or that device 402 acts as the beam former and device 404 acts as the beamformee. Moreover, the case of a single computing device 402 communicating with one computing device 404 is depicted, however, it is understood that multiple computing devices 402 may communicate with a single computing device 404, a single computing device 402 may communicate with multiple computing devices 404, or multiple computing devices 402 may communicate with multiple devices 404, for example, devices 402 and 404 are part of a multi-user multiple input multiple output (MU-MIMO) architecture.

In an exemplary implementation, computing device 402 is implemented as station requirement (STA) and/or user equipment (UE) communicating with an access point (AP) 404 (e.g., wireless access point (WAP), radio access network (RAN), base station (BS), wireless router). UE 402 may be implemented as, for example, stationary device(s) and/or mobile device(s), for example, a smartphone, a watch computer, a glasses computer, a tablet, a desktop computer, a laptop, a server, a computing cloud, and a kiosk.

Computing device 404 (when acting as the access point) may be implemented as, for example, a standalone computer, a server, a distributed system, software installed on an existing device (e.g., base station equipment) and/or a hardware card or other component attached or inserted into the existing equipment.

Computing device 402 and 404 each respectively include a transceiver 410, 412 for communicating over channel 406. Transceiver 410 and/or 412 may be implemented as multiple antennas. For example, access point 404 may include multiple antennas arranged according to a wireless communication architecture and/or modulation scheme.

Computing device 404 may be implemented, for example, within a base station, a transmission tower, a RAN, a wireless router or other network device that optionally provides wireless communication services between user equipment 402 and a network 414. Exemplary networks 414 include one or more of, the internet, a private network, another wireless cellular network, and a landline telephone network. Computing device 404 may include or be in communication with a network interface 416 for communicating with network 414.

Each computing device 402 and 404 includes a respective processor(s) 418, 420, which may be implemented as, for example, central processing unit(s) (CPU), graphics processing unit(s) (GPU), field programmable gate array(s) (FPGA), digital signal processor(s) (DSP), application specific integrated circuit(s) (ASIC), customized circuit(s), processors for interfacing with other units, and/or specialized hardware accelerators (e.g., encoders, decoders). Processor(s) 418 and/or 420 may include one or more processors (homogenous or heterogeneous), which may be arranged for parallel processing, as clusters and/or as one or more multi core processing units, for example, distributed across multiple virtual and/or physical servers, for example, located within a computing cloud and/or at multiple network connected processing nodes.

Each computing device 402 and 404 includes a respective memory 422, 424 that stores respective code instructions 422A, 424A executed by respective processor(s) 418 and 420, for example, code instruction that implement features of the method described with reference to FIG. 1. It is noted that processor(s) 418 and/or 420 may be designed to implement in hardware one or more features stored as code instructions. Memory 422 and/or 424 may be implemented as, for example, a hard drive, a random access memory (RAM), read-only memory (ROM), an optical drive, and/or other storage devices.

Each computing device 402 and 404 may include a respective data storage device 426, 428 that stores data, for example, a random access memory (RAM), read-only memory (ROM), and/or a storage device, for example, nonvolatile memory, magnetic media, semiconductor memory devices, hard drive, removable storage, optical media (e.g., DVD, CD-ROM), a remote storage server, and a computing cloud. For example, data storage device 426 of beamformee 402 may store code for different compression processes 426A from which a certain compression process is selected for compression of the data elements for the feedback message, as described herein. For example, data storage device 428 of beam former 404 may store code for different decompression processes 428A from which a certain decompression process is selected for decompression of the compressed data elements received in the feedback message, as described herein.

Computing devices 402 and/or 404 may include or be in communication with a respective user interface 434, 436 that a user uses to enter data and/or display (and/or hear) data, for example, one or more of: a touch-screen, a display, a keyboard, a mouse, voice activated software, and a microphone.

Referring now back to FIG. 3, at 302, multiple narrowband precoder feedback messages are received. The narrowband precoder feedback messages may be received for processing, for example, by the processor(s) of the beamformee and/or by an add-on device and/or a remote device having a processor(s) in communication with the beamformee.

The narrowband precoder feedback messages are computed (e.g., by the processor of the beamformee device) based on a calibration message transmitted by the beamformer device over a wireless channel. The calibration message is analyzed (e.g. by the processor of the beamformee device) to compute a parameter of a wideband precoder feedback message for a transmission bandwidth. The narrowband precoder feedback messages are computed (e.g., by the processor of the beamformee device) according to the parameter of the wideband precoder feedback message.

Optionally, the calibration messages transmitted by the beamformer device include values selected by the beamformer that define selection of the data elements by the beamformee device for compression thereof, and/or define the compression process to use for compression of the selected data elements, as described herein.

At 304, one or more data elements are selected from the narrowband precoder feedback messages for compression thereof. For example, when the narrowband precoder feedback messages are each implemented as a matrix, one or more rows of the matrix (e.g., each matrix) and/or one or more elements of the matrix (e.g., each matrix) may be selected.

It is noted that the data element(s) may be selected for compression after the calculation of the narrowband precoder.

Optionally, the beamformee selects the number of data elements per narrowband precoder feedback message (i.e., per tone) to compress, for example, the number of data elements is selected according to current link conditions.

Optionally, the respective power level of each data element of the narrowband precoder feedback messages is computed. Data element(s) having a respective power level below a power level threshold may be selected for compression. The power level threshold may be set as a percentage of total power. Alternatively, the data element(s) is selected when the respective power level of the data element(s) is below a power level threshold and when a sum of power levels of multiple selected data elements is below a maximal power level threshold.

Optionally, a value of the power threshold and/or a value of the maximal power level threshold is defined in the calibration message received from the beamforming device. Alternatively, the value of the power threshold and/or the value of the maximal power level may be obtained, for example, computed by the beamformee device, manually defined by a user, obtained from a memory storing the values, and/or predefined as default system configuration values.

As described below in additional detail, inventors performed a computational evaluation by examining the typical values of narrowband precoder matrix entries. Simulations of TGn-D channel model showed that more than 20% of entries of NB precoder matrix have a power below 0.01 (1% of total power). Based on these results the size of the feedback message may be reduced by about 20% with very small reduction in total power. The threshold may be adjusted to desired performance and indicated within the NDP procedure. As described below in additional detail, inventors performed another computational evaluation by checking the difference in signal to noise ratio (SNR) between the original precoder and the precoder with nulled rows. K = 10 and power level threshold of 0.08 (8% of power) were selected, which result in an average of about 3.7 rows that are selected to be nulled. In 80% of the cases the SNR difference is below 60dB (Decibels), while in all the cases it is below 30dB, which means no degradation of the performance is expected.

At 306, the selected data element(s) are compressed with the first compression process for generating a compressed set of narrowband precoder feedback messages. Optionally, the non-selected data elements are compressed with the second compression process. The non-selected data elements compressed with the second compression process are included in the narrowband precoder feedback messages. The narrowband precoder feedback size may be adjusted by reducing a number of bits that is used for compression of selected data elements, for example, rows of *V*_{NB} matrix (e.g., by reducing the number of bits and/or nulling).

The selected data elements are compressed using a first compression process. Examples of the first compression process are as described herein. The first compression process is different than an optional second compression process used for compression of the non-selected data elements. The second compression process may be a standard compression process defined by a standard beamforming protocol being implemented by the beamformee device and the beamformer device. It is noted that the second compression process is optional. It is noted that the second compression process may be applied after the first compression process has been applied, for example, the selected data elements are compressed using the first compression process, and the second compression process is then applied to all of the data elements, including the data elements compressed using the first compression process and the non-selected data elements.

Optionally, a different (or same) respective first compression process is selected for each narrowband precoder feedback message, for example, by the beamformee and/or by the beamforming device (e.g., the beamforming device transmits an indication of which first compression process to use in the calibration messages transmitted to the beamformee). The first compression process may be selected for each narrowband precoder feedback message from multiple candidate first compression processes. Selecting the compression scheme per tone (i.e., per narrowband precoder feedback message) may increase the gain of mixed beamforming without performance degradation. For example, the first compression scheme is selected according to current link conditions.

Each compressed narrowband precoder feedback message transmitted to the beamforming device may include an indication of the respective selected first compression process used to compress the selected data element(s). The indication may be stored in an indication field within the respective feedback message. The beamformee uses the indication in the indication field in the respective feedback message to decompress the compressed data elements.

Optionally, the first compression process is implemented by removing each selected data element, also referred to as *nulling.* The removal of the select data elements reduces the size of the feed back message, by eliminating the bits that would otherwise be needed to store the selected data element(s).

Optionally, a maximal number of data elements selected for compression is provided, for example, predefined and stored in a memory of the beamformee, defined in the calibration message received from the beamforming device, manually selected by a user, and/or a predefined default system configuration value. Selecting the maximal number of data elements for compression per tone (i.e., per narrowband precoder feedback message) may increase the gain of mixed beamforming without performance degradation

Optionally, each of the compressed narrowband precoder feedback messages includes a respective field indicating the respective compressed data element, for example, an index and/or mapping indicating which of the data elements are compressed using the first compression process. The new field indication in the feedback message may provide the data to enable decompression while reducing (e.g., minimal) degradation in the achievable gain.

Optionally, a number of the data element selected for compression is predefined (e.g., fixed) for each of the compressed narrowband precoder feedback messages. For example, the number of data elements that may be compressed may be a predefined system configuration value, and/or obtained from a memory. Each respective field of the compressed narrowband precoder feedback message stores an indication of each one of the number of selected data element for the respective compressed narrowband precoder feedback message.

Alternatively, the number of data elements selected for compression is variable. The variable number may be selected for each of the compressed narrowband precoder feedback messages. The respective field of the compressed narrowband precoder feedback message stores an indication of the selected number of data element included in the respective message, and/or stores an indication of which of the data element of each respective compressed narrowband precoder feedback message are compressed. Optionally, the respective field for each respective compressed narrowband precoder feedback message stores a bitmap denoting which of the data elements are compressed. The size of the bitmap may be selected to accommodate the maximal number of data elements that are compressed in the same message. The bitmap may indirectly indicate the number of data elements selected for compression, by indicating which data elements are compressed.

At 308, the compressed narrowband precoder feedback messages and the wideband precoder feedback message are provided for transmission to the beamforming device.

The compressed narrowband precoder feedback messages and the wideband precoder feedback message may be transmitted from the beamformee to the beamforming device over the wireless channel using the respective transceivers (e.g., multiple antennas).

The narrowband precoder feedback messages may include respective fields that indicate which data element(s) are compressed and/or which first compression processes have been used to compress the selected data element(s).

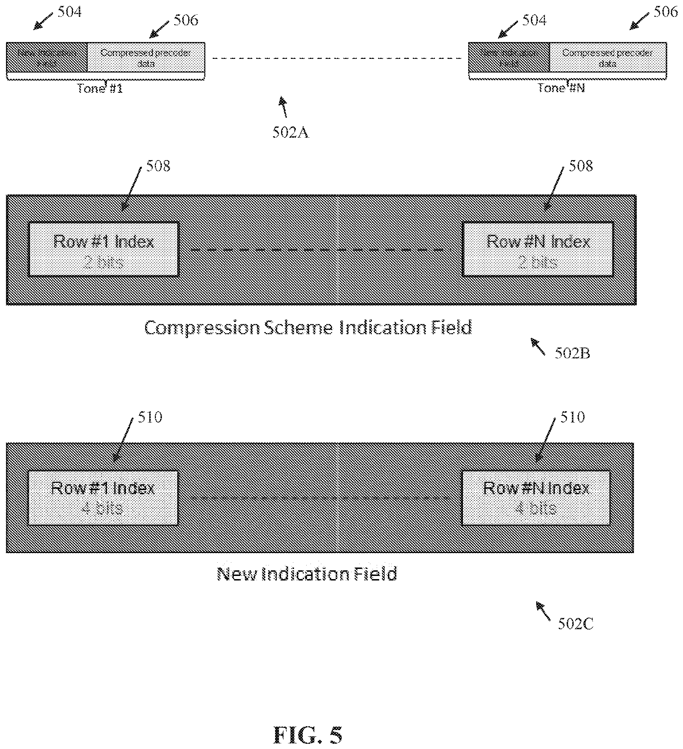

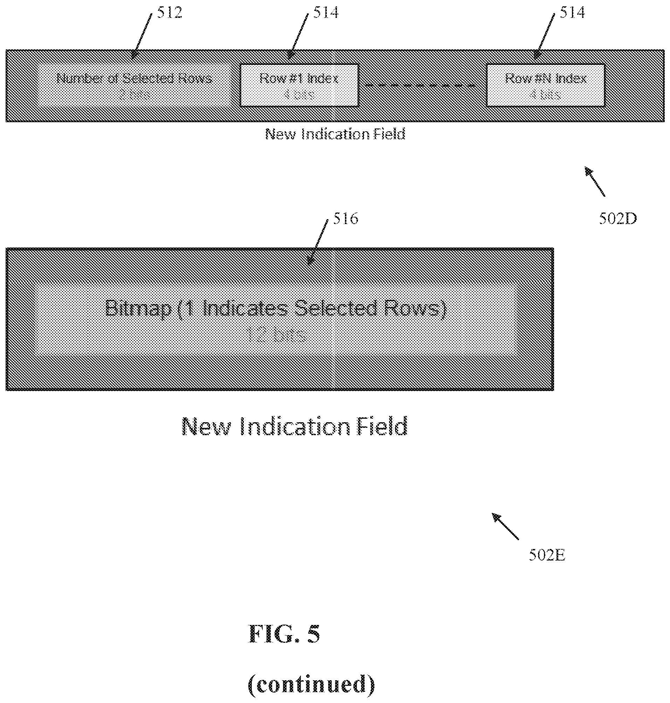

Reference is now made to FIG. 5, which includes schematics 502A-E of fields introduced into the narrowband precoder feedback messages provided to the beamforming device, in accordance with some embodiments of the present invention.

Schematic 502A depicts a respective indication field 504 which may be added to the feedback messages storing the compressed data 506, optionally per tone. Indication field 504 stores an indication of which data elements are compressed and/or which first compression scheme is used. The beamforming device is able to decompress the compressed data elements according to the data stored in the indication fields 504 to reconstruct the precoder matrix.

Schematic 502B depicts an indication field 508 that stores an indication of the selected first compression process used to compress the selected data elements, optionally per tone. Optionally, a predefined list of first compression schemes is indexed and defined and known by both the beamforming device and the beamformee device. Indication field 508 may store an indication of the index of the selected first compression scheme. For example, when the list includes up to 4 possible first compression processes (e.g., one of them may be a nulling of the selected data elements), the size of each indication field 508 is 2 bits.

Schematic 502C depicts an indication field 510 that stores an indication of which data elements (e.g., rows of a matrix) are compressed. Field 510 is based on the implementation of a predefined number of data elements that are compressed. The predefined number may be provided, for example, selected by the beamforming device and provided to the beamformee in the calibration message(s), stored in a memory, manually selected by a user, and/or a preset system configuration value. Optionally, the data elements are indexed, and field 510 stores an indication of the value of the index of the compressed data elements for each narrowband precoder. For example, 4 bits represent each selected data element (e.g., row in the matrix), which covers all possible cases up to 16 transmit antennas. For example, when the number of selected data elements is two, field 510 is 1 bit per tone.

Schematic 502D depicts an indication field that includes a component for storing a number of data elements that are compressed 512 and an indication of which data elements are compressed 514, per tone. The number of data elements that are compressed is variable, for example, dynamically selected by the beamformee per tone and/or in real time according to current wireless link condition, optionally based on a defined maximal number threshold. The beamformee device may indicate the indices of the selected data elements (e.g., rows of the matrix) in 514 and the number of the selected data elements (e.g., rows of the matrix) for each narrowband precoder in 512. For example, 2 bits are implemented to indicate the number of the selected rows 512 (assuming no more than 4 rows would be selected). For example, when the number of the selected rows is 2, the additional field 514 is 2bits to indicate a number of rows and 8bits for indices 514, a total of 10bits per tone.

Schematic 502E depicts an indication field 516 that stores an indication of which data elements (e.g., rows of the matrix) are compressed, optionally based on defined maximal number of data elements threshold. The number of data elements that are compressed is variable, for example, dynamically selected by the beamformee per tone and/or in real time according to current wireless link condition. Field 516 may be implemented as a bitmap. Field 516 may be implemented per narrowband precoder. For example, 12bits are implemented in field 516 to indicate the selected data elements, such as rows of a matrix (assuming K value is not larger than 12). It is noted that regardless of the number of selected data elements (e.g., rows), the beamformee transmits 12bits per tone.

At 310, the beamforming device reconstructs the narrowband precoder feedback messages by decompressing the respective compressed data element(s). The beamforming device reconstructs the precoder matrix using the decompressed data elements(s).

The decompression may be performed according to respective fields of the feedback messages that indicate which data element(s) are compressed. The process for decompression may be selected according to respective fields of the feedback messages that indicate which first compression processes have been used to compress the selected data element(s). For example, when the nulling compression process is used, the beamformer device reconstructs the narrowband precoder feedback messages from the compressed narrowband precoder feedback messages by adding null values for each removed data element.

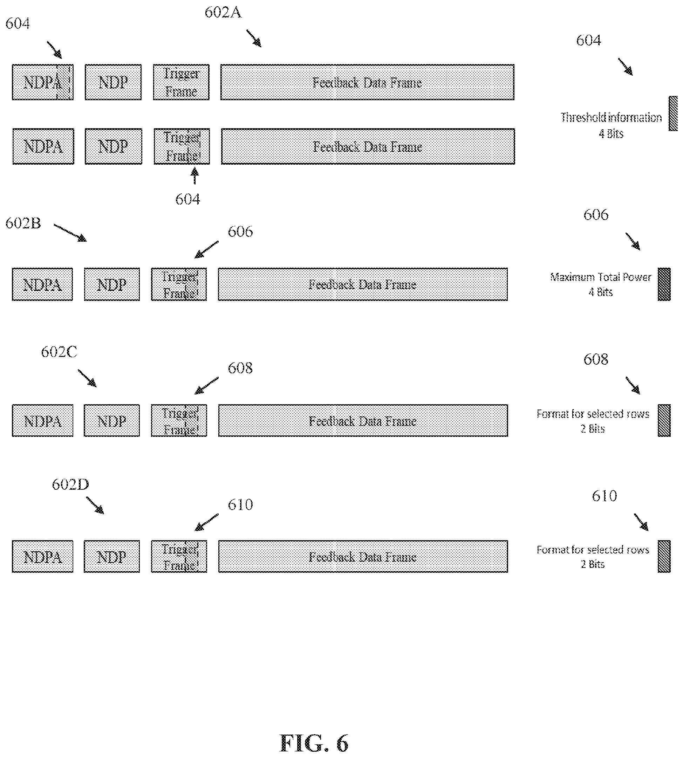

Reference is now made to FIG. 6, which includes schematic 602A-D depicting examples of values of parameters for compression of selected data elements, provided by the beamforming device for implementation by the beamformee device, in accordance with some embodiments of the present invention. The values of the parameters may be provided by the beamforming device as part of the calibration messages transmitted to the beamformee device, as described with reference in 302 of FIG. 3.

Schematic 602A includes a field 604 storing a value for a threshold for selection of the data element(s) for compression, for example, percentage of a total maximum power. Data elements having power values below the threshold are selected for compression. The threshold may be obtained, for example, selected from the predefined list, defined by a user, as a predefined system configuration value, and/or dynamically computed. Field 604 may be implemented, for example, in an NDPA frame and/or in a trigger frame defined by a beamforming standard.

Schematic 602B includes a field 606 storing a value providing a maximal total power threshold for the compressed data element(s). The aggregated total power value of the individual compressed data element(s) is to remain below the maximal total power threshold. Additional data element(s) are not compressed when their individual power levels, when added to the total of the selected data elements is above the threshold, even when the individual power levels are below the individual threshold of percentage of total maximal power (e.g., as defined in field 606). The maximal total power threshold helps ensure that the overall quality does not significantly degrade as a removal of too many individual data elements. Field 606 may be implemented, for example, in the NDPA frame defined by the beamforming standard.

Schematic 602C includes a field 608 storing a value indicating a maximal number of data elements (e.g., rows) that may be selected for compression. Capping the maximal number of data elements that may be compressed by the beamformee may limit the amount of performance degradation. Field 608 may be implemented, for example, in the NDPA frame defined by the beamforming standard.

Schematic 602D includes a field 610 storing a value indicating a first compression format for compression of the selected data element(s) selected from a set of candidate compression formats. The beamforming device may select the first compression format to be used by the beamformee device for compression of the selected data element(s). Field 610 may be implemented, for example, in the NDPA frame defined by the beamforming standard.

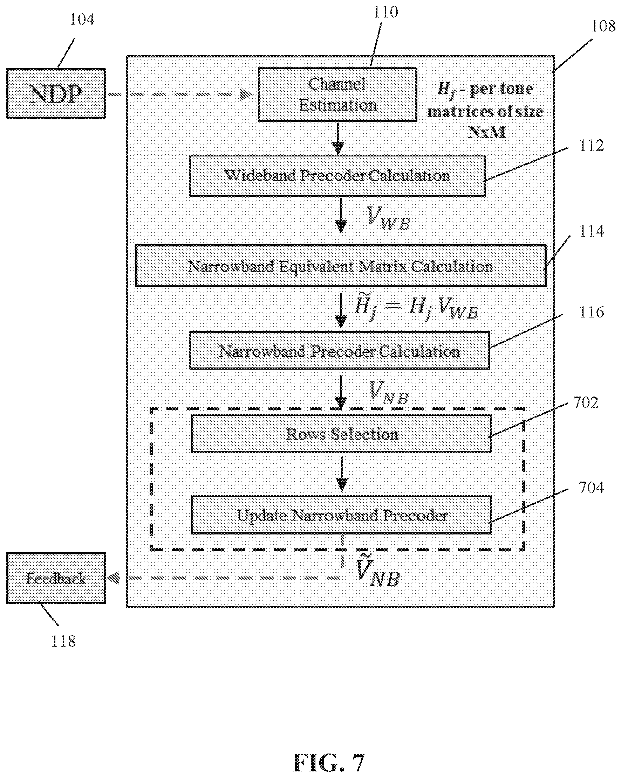

Reference is now made to FIG. 7, which is a dataflow diagram implementing the compression of selected data elements implemented within the standard mixed beamforming approach depicted with reference to FIG. 1, in accordance with some embodiments of the present invention. The dataflow features 104, 108, 110, 112, 114, 116, and 118, are as described with reference to FIG. 1. The features of row selection (also referred to herein as selection of data elements for compression thereof) 702, and updating the narrowband precoder 704 by performing the compression of the selected data elements, which follow 116, are performed as described herein. Feedback message 118 includes the updated narrowband precoder with compressed data elements, as described herein.

Various embodiments and aspects and/or implementations of systems, methods, apparatus, and/or code instructions as delineated hereinabove and as claimed in the claims section below find experimental and/or calculated and/or simulation based support in the following examples.

### EXAMPLES

Reference is now made to the following examples, which together with the above descriptions illustrate some embodiments and/or implementations of systems, methods, apparatus, and/or code instructions described herein in a non limiting fashion.

Inventors performed several experiments and/or simulations to provide evidence that compression of the data elements as described herein may be performed without significant degradation in performance. Experiments were performed under the following assumptions:
First, relating to the precoder matrix properties. The precoder matrix is a unitary matrix *V_{NB}* obtained by a singular value decomposition (SVD) procedure. When some elements of this matrix are changed, the norm of each column is not unit (1) anymore and the columns are not orthogonal anymore. For purposes of performing the simulations, Inventors assume that the norm of each column may be corrected but Inventors did not correct the orthogonality. The impact was checked in the simulations as described below.
Second, relating to SNR change. The zero forcing (ZF) SNR is defined by the values of the *D* matrix which is a result of the *SVD,* however this holds only if *V_{NB}* matrix is applied as a precoder. Assuming a different *Ṽ_{NB}* is used, the SNR value is given by covariance of matrix *G*⁻¹ *=* (*DV_{NB}Ṽ_{NB}*)⁻¹*.* Invetors performed experiments and/or simulations to check the impact of removing rows on the SNR, as described below.

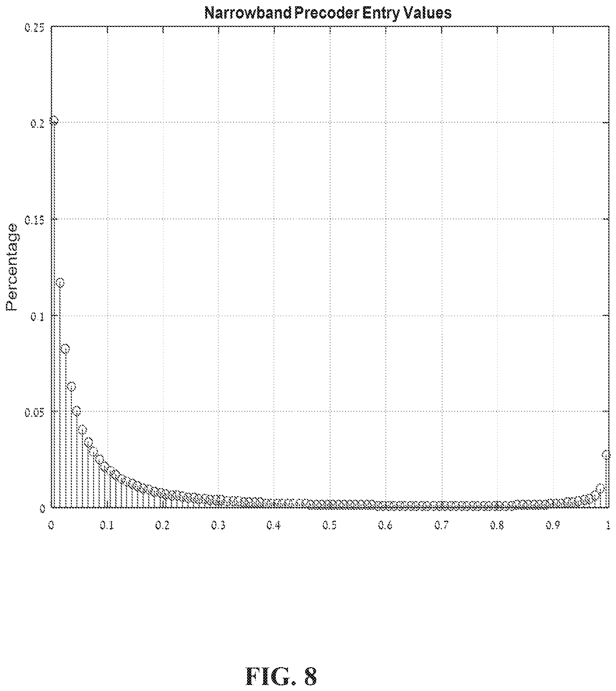

Reference is now made to FIG. 8, which is a histogram of an absolute number of data elements versus a percentage of total power, useful for defining a threshold value for selection of data elements for compression thereof, in accordance with some embodiments of the present invention. Inventors performed an experiment to examine the typical values of narrowband precoder matrix entries. Simulations of TGn-D channel model, which are summarized in the histogram, show, for example that more than 20% of entries of NB precoder matrix have a power below 0.01 (1% of total power). Based on these results, the feedback size may be by 20% with very small reduction in total power. The threshold may be adjusted to desired performance and indicated within NDP procedure.

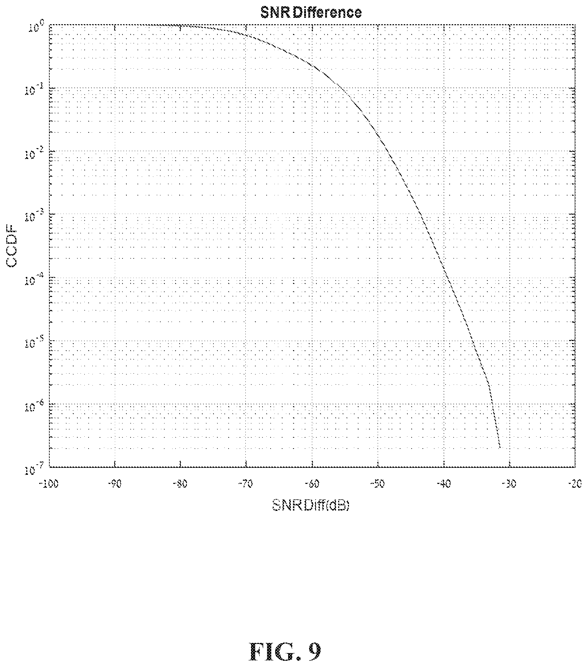

Reference is now made to FIG. 9, which is a graph depicting complementary cumulative distribution function (CCDF) of SNR differences between compression of data elements in accordance with some embodiments of the present invention, and the standard approach of mixed beamforming without compression of data elements. Inventors performed an experiment to check the difference in SNR between the original precoder computed using the standard mixed beamforming approach and the precoder with compressed data elements (rows were nulled in this experiment). The value K = 10 was used for the experiment, and threshold of 0.08 (8% of power) was used to select rows of data elements for compression thereof, which results in average of about 3.7 rows that were selected to be nulled. As shown in the graph, in about 80% of the cases the SNR difference is below 60dB, while in all the cases it is below 30dB, which means that no significant degradation of performance is expected when implementing compression of data elements, as described herein.

Inventors performed another set of simulations based on at least some implementations of the systems, apparatus, methods, and/or code instructions described herein, by running the simulations with norm correction of the columns of *Ṽ _NB*, while ignoring the orthogonality issue discussed above. Inventors simulated an architecture of SU-MIMO (single user multiple-input and multiple-output) with 16 Tx antennas, Nss = 2 and the two cases: K = 8, and 2 rows nulled; *K* = 10 and using threshold of 0.08.

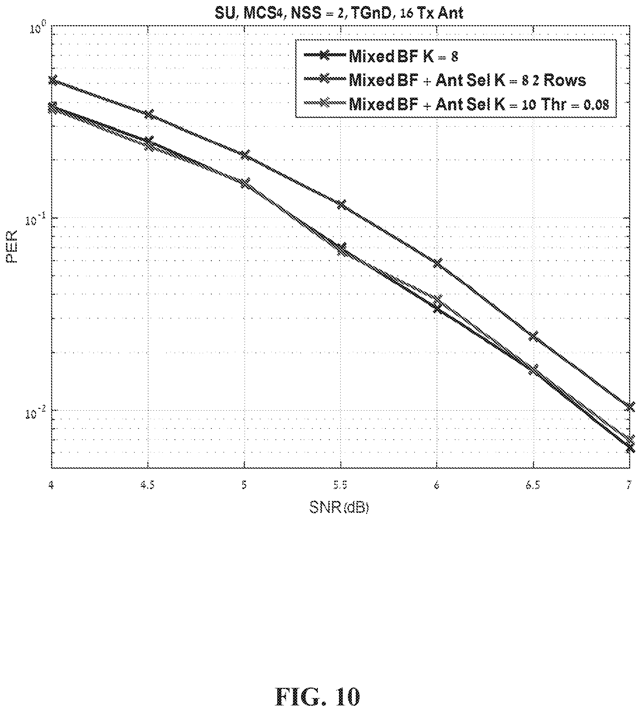

Reference is now made to FIG. 10, which is a graph of the results of the SU-MIMO simulation, in accordance with some embodiments of the present invention. The graph depicts PER versus SNR for different curves denoting different K values and different compression approaches. The graph shows that removing 2 rows (*K_{NB}* = 6) produces a very small degradation of about 0.2dB while using larger *K* = 10 and threshold produces no performance degradation.

Inventors performed yet another set of simulations for two cases of MU-MIMO (multiple user MIMO): MU-MIMO - 16 Tx antennas, 2 STAs, Nss = 2 per STA, K = 10, 4 rows nulled; and the case of MU-MIMO - 16 Tx antennas, 2 STAs, Nss = 2 per STA, K = 10 with threshold of 0.08. The results were compared to = 6 and K = 8 without antenna selection.

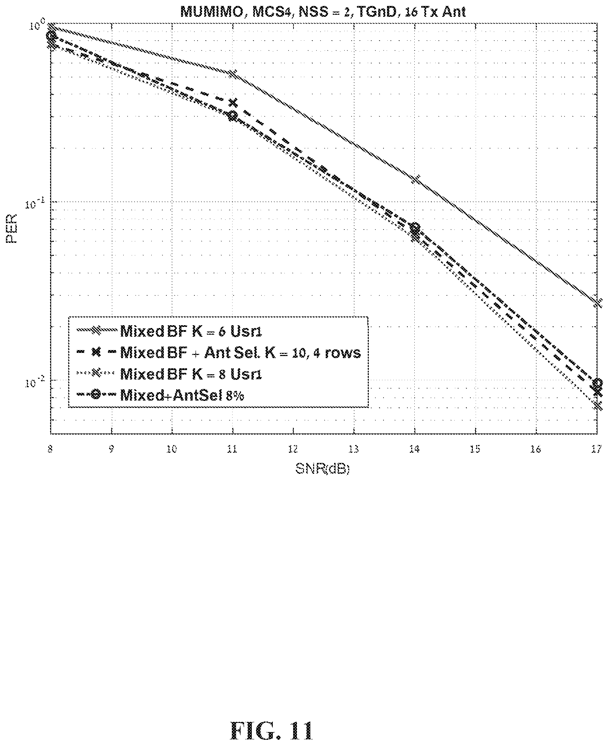

Reference is now made to FIG. 11, which is a graph of the results of the MU-MIMO simulation, in accordance with some embodiments of the present invention. The graph depicts PER versus SNR for different curves denoting the different cases of simulated MU-MIMO architectures and/or parameters. The graph shows that in case of MU-MIMO, a larger wideband precoder may be required in order achieve almost no degradation (increase feedback size negligibly).

Inventors performed yet another set of simulations to examine the maximal additional feedback size reduction that may be achieved on top of mixed BF (with predefined K value) by applying the compression of selected data elements, as described herein. The simulations were conducted based on the assumption that the beamformee is equipped with 2 antennas, and the selected compression scheme is nulling (i.e., practically removing the rows). The following three cases were simulated and examined: K = 8 with 2 rows to remove - narrowband precoder matrix size is 6x2 (18 angles) instead of 8x2 (26 angles); *K =* 12 with 4 rows to remove - narrowband precoder matrix size is 8x2 instead of 12x2; and *K =* 10 with 4 rows to remove - narrowband precoder size is 6x2, compared to *K* = 8.

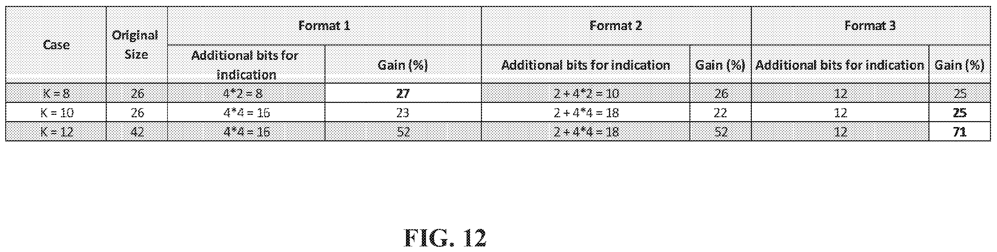

Reference is now made to FIG. 12, which is a table summarizing the gain results for the three simulated cases, in accordance with some embodiments of the present invention.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Citation or identification of any reference in this application shall not be construed as an admission that such reference is available as prior art to the present invention. To the extent that section headings are used, they should not be construed as necessarily limiting.

## Claims

1. An apparatus (402) for computation of a feedback message to a beamforming device (404) for computing a precoding dataset for mixed beamforming a plurality of spatial streams for transmission by a plurality of transmitters (412), comprising:
a processor (418) configured to:
receive a plurality of narrowband precoder feedback messages (302), wherein the plurality of narrowband precoder feedback messages are computed based on a calibration message transmitted by the beamforming device (404) over a wireless channel (406), the calibration message is analyzed to compute a parameter of a wideband precoder feedback message for a transmission bandwidth, and the plurality of narrowband precoder feedback messages are computed according to the parameter of the wideband precoder feedback message;
select at least one data element from the plurality of narrowband precoder feedback messages for compression thereof based on a power level threshold, wherein data elements having a power level below a predefined threshold are compressed using a first compression process (426A), comprising either bit reduction or nulling, that is different than a second compression process used for compression of non-selected data elements (304), wherein the second compression process enables the non-selected data elements to be compressed and provided to the beamforming device with relative higher accuracy;
generate a compressed plurality of narrowband precoder feedback messages by compressing the selected at least one data element with the first compression process (426A) and compressing the non-selected data elements with the second compression process (306); and
provide the compressed plurality of narrowband precoder feedback messages and the wideband precoder feedback message for transmission to the beamforming device (404) (308).

2. The apparatus (402) according to claim 1, wherein each of the compressed plurality of narrowband precoder feedback messages includes a respective field indicating the respective compressed at least one data element, thereby allowing the beamforming device (404) to reconstruct the plurality of narrowband precoder feedback messages by decompressing (428A) the respective compressed at least one data element defined by each respective field (310).

3. The apparatus (402) according to claim 2, wherein a number of selected at least one data element is predefined for each of the compressed plurality of narrowband precoder feedback messages, and each respective field stores an indication of each one of the number of selected at least one data element for the respective compressed narrowband precoder feedback message.

4. The apparatus (402) according to claim 2, wherein a number of the selected at least one data element is variable and selected by the processor (418) for each of the compressed plurality of narrowband precoder feedback messages, and the respective field stores an indication of the selected number of at least one data element for the respective compressed narrowband precoder feedback message and an indication of each one of the selected at least one data element for each respective compressed narrowband precoder feedback message.

5. The apparatus (402) according to claim 4, wherein the respective field stores a bitmap denoting each respective selected number of at least one data element for each respective compressed narrowband precoder feedback message.

6. The apparatus (402) according to any of claims 1-5, wherein the processor (418) is configured to select a respective first compression process for each narrowband precoder feedback message from a plurality of candidate first compression processes (426A).

7. The apparatus (402) according to claim 6, wherein at least one of: each compressed plurality of narrowband precoder feedback messages transmitted to the beamforming device (404) include an indication of the respective selected compression process, and each respective selected compression process is defined in the calibration message received from the beamforming device (404).

8. The apparatus (402) according to any of claims 1-7, wherein the selected at least one data element is compressed by removing each selected at least one data element, thereby allowing the beamforming device (404) to reconstruct the plurality of narrowband precoder feedback messages from the compressed plurality of narrowband precoder feedback messages by adding null values for each removed at least one data element.

9. The apparatus (402) according to any of claims 1-8, wherein the processor (418) is configured to compute a power level of each of data element of the plurality of narrowband precoder feedback messages.

10. The apparatus (402) according to claim 9, wherein the power level threshold is set as a percentage of total power.

11. The apparatus (402) of according to any of claims 9-10, wherein the at least one data element is selected when the respective power level of the at least one data element is below a power level threshold and when a sum of power levels of a plurality of selected data elements is below a maximal power level threshold.

12. The apparatus (402) according to claim 11, wherein at least one of: a value of the power threshold and a value of the maximal power level threshold, is defined in the calibration message received from the beamforming device (404).

13. The apparatus (402) according to any of claims 1-12, wherein a maximal number of data elements selected for compression is at least one of: predefined and stored in a memory of the apparatus, and defined in the calibration message received from the beamforming device (404).

14. The apparatus (402) according to claim 13, wherein selecting comprises selecting at least one row of a matrix for compression.

## Patentansprüche

1. Einrichtung (402) für eine Berechnung einer Rückmeldungsnachricht an eine Strahlformungsvorrichtung (404) zum Berechnen eines Vorcodierungsdatensatzes für eine gemischte Strahlformung einer Vielzahl von räumlichen Strömen für eine Übertragung durch eine Vielzahl von Sendern (412), die umfasst:
einen Prozessor (418), der konfiguriert ist zum:
Empfangen einer Vielzahl von Schmalband-Vorcodierer-Rückmeldungsnachrichten (302), wobei die Vielzahl von Schmalband-Vorcodierer-Rückmeldungsnachrichten basierend auf einer Kalibrierungsnachricht, die von der Strahlformungsvorrichtung (404) über einen drahtlosen Kanal (406) übertragen wird, berechnet werden, die Kalibrierungsnachricht analysiert wird, um einen Parameter einer Breitband-Vorcodierer-Rückmeldungsnachricht für eine Übertragungsbandbreite zu berechnen, und die Vielzahl von Schmalband-Vorcodierer-Rückmeldungsnachrichten gemäß dem Parameter der Breitband-Vorcodierer-Rückmeldungsnachricht berechnet wird;
Auswählen mindestens eines Datenelements aus der Vielzahl von Schmalband-Vorcodierer-Rückmeldungsnachrichten für eine Kompression davon basierend auf einem Leistungspegelschwellenwert, wobei Datenelemente, die einen Leistungspegel unterhalb eines vordefinierten Schwellenwerts aufweist, unter Verwendung eines ersten Kompressionsprozesses (426A) komprimiert werden, der entweder Bit-Reduktion oder -Nullsetzung umfasst, der sich von einem zweiten Kompressionsprozess unterscheidet, der für die Kompression von nicht-ausgewählten Datenelementen (304) verwendet wird, wobei der zweite Kompressionsprozess es ermöglicht, dass die nicht-ausgewählten Datenelemente komprimiert und der Strahlformungsvorrichtung mit relativ höherer Genauigkeit bereitgestellt werden;
Erzeugen einer komprimierten Vielzahl von Schmalband-Vorcodierer-Rückmeldungsnachrichten durch Komprimieren des ausgewählten mindestens einen Datenelements mit dem ersten Kompressionsprozess (426A) und Komprimieren der nicht-ausgewählten Datenelemente mit dem zweiten Kompressionsprozess (306); und
Bereitstellen der komprimierten Vielzahl von Schmalband-Vorcodierer-Rückmeldungsnachrichten und der Breitband-Vorcodierer-Rückmeldungsnachricht für die Übertragung an die Strahlformungsvorrichtung (404) (308).

2. Einrichtung (402) nach Anspruch 1, wobei jede der komprimierten Vielzahl von Schmalband-Vorcodierer-Rückmeldungsnachrichten ein jeweiliges Feld einschließt, das das jeweilige komprimierte mindestens eine Datenelement angibt, wodurch es der Strahlformungsvorrichtung (404) ermöglicht wird, die Vielzahl von Schmalband-Vorcodierer-Rückmeldungsnachrichten durch Dekomprimieren (428A) des jeweiligen komprimierten mindestens einen Datenelements, das durch jedes jeweilige Feld (310) definiert ist, zu rekonstruieren.

3. Einrichtung (402) nach Anspruch 2, wobei eine Anzahl von ausgewählten mindestens einem Datenelement für jede der komprimierten Vielzahl von Schmalband-Vorcodierer-Rückmeldungsnachrichten vordefiniert ist, und jedes jeweilige Feld eine Angabe von jedem einen der Anzahl von ausgewählten mindestens einem Datenelement für die jeweilige komprimierte Schmalband-Vorcodierer-Rückmeldungsnachricht speichert.

4. Einrichtung (402) nach Anspruch 2, wobei eine Anzahl des ausgewählten mindestens einen Datenelements variabel ist und von dem Prozessor (418) für jede der komprimierten Vielzahl von Schmalband-Vorcodierer-Rückmeldungsnachrichten ausgewählt wird, und das jeweilige Feld eine Angabe der ausgewählten Anzahl von mindestens einem Datenelement für die jeweilige komprimierte Schmalband-Vorcodierer-Rückmeldungsnachricht und eine Angabe von jedem einzelnen des ausgewählten mindestens einen Datenelements für jede jeweilige komprimierte Schmalband-Vorcodierer-Rückmeldungsnachricht speichert.

5. Einrichtung (402) nach Anspruch 4, wobei das jeweilige Feld eine Bitmap speichert, die jede jeweilige ausgewählte Anzahl von mindestens einem Datenelement für jede jeweilige komprimierte Schmalband-Vorcodierer-Rückmeldungsnachricht bezeichnet.

6. Einrichtung (402) nach einem der Ansprüche 1 bis 5, wobei der Prozessor (418) konfiguriert ist, um einen jeweiligen ersten Kompressionsprozess für jede Schmalband-Vorcodierer-Rückmeldungsnachricht aus einer Vielzahl von ersten Kandidatenkompressionsprozessen (426A) auszuwählen.

7. Einrichtung (402) nach Anspruch 6, wobei mindestens eines von: jeder komprimierten Vielzahl von Schmalband-Vorcodierer-Rückmeldungsnachrichten, die an die Strahlformungsvorrichtung (404) übertragen wird, eine Angabe des jeweiligen ausgewählten Kompressionsprozesses einschließt, und jedem jeweiligen ausgewählten Kompressionsprozess in der Kalibrierungsnachricht, die von der Strahlformungsvorrichtung (404) empfangen wird, definiert ist.

8. Einrichtung (402) nach einem der Ansprüche 1 bis 7, wobei das ausgewählte mindestens eine Datenelement durch Entfernen jedes ausgewählten mindestens einen Datenelements komprimiert wird, wodurch es der Strahlformungsvorrichtung (404) ermöglicht wird, die Vielzahl von Schmalband-Vorcodierer-Rückmeldungsnachrichten aus der komprimierten Vielzahl von Schmalband-Vorcodierer-Rückmeldungsnachrichten zu rekonstruieren, indem Nullwerte für jedes entfernte mindestens eine Datenelement hinzugefügt werden.

9. Einrichtung (402) nach einem der Ansprüche 1 bis 8, wobei der Prozessor (418) konfiguriert ist, um einen Leistungspegel jedes Datenelements der Vielzahl von Schmalband-Vorcodierer-Rückmeldungsnachrichten zu berechnen.

10. Einrichtung (402) nach Anspruch 9, wobei der Leistungspegelschwellenwert als ein Prozentsatz der Gesamtleistung eingestellt ist.

11. Einrichtung (402) nach einem der Ansprüche 9 bis 10, wobei das mindestens eine Datenelement ausgewählt wird, wenn der jeweilige Leistungspegel des mindestens einen Datenelements unter einem Leistungspegelschwellenwert liegt und wenn eine Summe von Leistungspegeln einer Vielzahl von ausgewählten Datenelementen unter einem maximalen Leistungspegelschwellenwert liegt.

12. Einrichtung (402) nach Anspruch 11, wobei mindestens einer von: einem Wert der Leistungsschwelle und einem Wert der maximalen Leistungspegelschwelle, in der Kalibrierungsnachricht, die von der Strahlformungsvorrichtung (404) empfangen wird, definiert ist.

13. Einrichtung (402) nach einem der Ansprüche 1 bis 12, wobei eine maximale Anzahl von Datenelementen, die für die Kompression ausgewählt werden, mindestens eines ist von: vordefiniert und in einem Speicher der Einrichtung gespeichert, und in der Kalibrierungsnachricht, die von der Strahlformungsvorrichtung (404) empfangen wird, definiert.

14. Einrichtung (402) nach Anspruch 13, wobei das Auswählen das Auswählen mindestens einer Zeile einer Matrix für die Kompression umfasst.

## Revendications

1. Appareil (402) permettant de calculer un message de rétroaction à un dispositif de formation de faisceaux (404) destiné à calculer un ensemble de données de précodage pour une formation de faisceaux mixte d'une pluralité de flux spatiaux pour une transmission par une pluralité de transmetteurs (412), comprenant :
un processeur (418) configuré pour :
recevoir une pluralité de messages de rétroaction de précodeur à bande étroite (302), dans lequel la pluralité de messages de rétroaction de précodeur à bande étroite sont calculés sur la base d'un message d'étalonnage transmis par le dispositif de formation de faisceaux (404) sur un canal sans fil (406), le message d'étalonnage est analysé pour calculer un paramètre d'un message de rétroaction de précodeur à large bande pour une largeur de bande de transmission, et la pluralité de messages de rétroaction de précodeur à bande étroite sont calculés sur la base du paramètre du message de rétroaction de précodeur à large bande ;
sélectionner au moins un élément de données parmi la pluralité de messages de rétroaction de précodeur à bande étroite pour une compression associée sur la base d'un seuil de niveau de puissance, dans lequel des éléments de données ayant un niveau de puissance inférieur à un seuil prédéfini sont compressés à l'aide d'un premier processus de compression (426A), comprenant soit une réduction de bits, soit une annulation, qui est différent d'un second processus de compression utilisé pour une compression d'éléments de données non sélectionnés (304), dans lequel le second processus de compression permet aux éléments de données non sélectionnés d'être compressés et fournis au dispositif de formation de faisceaux avec une précision relativement plus élevée ;
générer une pluralité compressée de messages de rétroaction de précodeur à bande étroite en compressant l'au moins un élément de données sélectionné avec le premier processus de compression (426A) et en compressant les éléments de données non sélectionnés avec le second processus de compression (306) ; et
fournir la pluralité compressée de messages de rétroaction de précodeur à bande étroite et le message de rétroaction de précodeur à large bande pour une transmission au dispositif formation de faisceaux (404) (308).

2. Appareil (402) selon la revendication 1, dans lequel chacun de la pluralité compressée de messages de rétroaction de précodeur à bande étroite comporte un champ respectif indiquant l'au moins un élément de données compressé respectif, permettant ainsi au dispositif de formation de faisceaux (404) de reconstruire la pluralité de messages de rétroaction de précodeur à bande étroite en décompressant (428A) l'au moins un élément de données compressé respectif défini par chaque champ respectif (310).

3. Appareil (402) selon la revendication 2, dans lequel un nombre d'au moins un élément de données sélectionné est prédéfini pour chacun de la pluralité compressée de messages de rétroaction de précodeur à bande étroite, et chaque champ respectif stocke une indication de chacun du nombre d'au moins un élément de données sélectionné pour le message de rétroaction de précodeur à bande étroite compressé respectif.

4. Appareil (402) selon la revendication 2, dans lequel un nombre de l'au moins un élément de données sélectionné est variable et sélectionné par le processeur (418) pour chacun de la pluralité compressée de messages de rétroaction de précodeur à bande étroite, et le champ respectif stocke une indication du nombre sélectionné d'au moins un élément de données pour le message de rétroaction de précodeur à bande étroite compressé respectif et une indication de chacun de l'au moins un élément de données sélectionné pour chaque message de rétroaction de précodeur à bande étroite compressé respectif.

5. Appareil (402) selon la revendication 4, dans lequel le champ respectif stocke une table de bits désignant chaque nombre sélectionné respectif d'au moins un élément de données pour chaque message de rétroaction de précodeur à bande étroite compressé respectif.

6. Appareil (402) selon l'une quelconque des revendications 1 à 5, dans lequel le processeur (418) est configuré pour sélectionner un premier processus de compression respectif pour chaque message de rétroaction de précodeur à bande étroite d'une pluralité de premiers processus de compression candidats (426A).

7. Appareil (402) selon la revendication 6, dans lequel au moins l'un parmi : chaque pluralité compressée de messages de rétroaction de précodeur à bande étroite transmis au dispositif de formation de faisceaux (404) comporte une indication du processus de compression sélectionné respectif, et chaque processus de compression sélectionné respectif est défini dans le message d'étalonnage reçu en provenance du dispositif de formation de faisceaux (404).

8. Appareil (402) selon l'une quelconque des revendications 1 à 7, dans lequel l'au moins un élément de données sélectionné est compressé en supprimant chaque au moins un élément de données sélectionné, permettant ainsi au dispositif de formation de faisceaux (404) de reconstruire la pluralité de messages de rétroaction de précodeur à bande étroite à partir de la pluralité compressée de messages de rétroaction de précodeur à bande étroite en ajoutant des valeurs nulles pour chaque au moins un élément de données supprimé.

9. Appareil (402) selon l'une quelconque des revendications 1 à 8, dans lequel le processeur (418) est configuré pour calculer un niveau de puissance de chaque élément de données de la pluralité de messages de rétroaction de précodeur à bande étroite.

10. Appareil (402) selon la revendication 9, dans lequel le seuil de niveau de puissance est réglé en tant que pourcentage de puissance totale.

11. Appareil (402) selon l'une quelconque des revendications 9 à 10, dans lequel l'au moins un élément de données est sélectionné lorsque le niveau de puissance respectif de l'au moins un élément de données est inférieur à un seuil de niveau de puissance et lorsqu'une somme de niveaux de puissance d'une pluralité d'éléments de données sélectionnés est inférieure à un seuil de niveau de puissance maximal.

12. Appareil (402) selon la revendication 11, dans lequel au moins l'une parmi : une valeur du seuil de puissance et une valeur du seuil de niveau de puissance maximal sont définies dans le message d'étalonnage reçu en provenance du dispositif de formation de faisceaux (404).

13. Appareil (402) selon l'une quelconque des revendications 1 à 12, dans lequel un nombre maximal d'éléments de données sélectionnés pour une compression est au moins l'un parmi : prédéfini et stocké dans une mémoire de l'appareil, et défini dans le message d'étalonnage reçu en provenance du dispositif de formation de faisceaux (404).

14. Appareil (402) selon la revendication 13, dans lequel la sélection comprend la sélection d'au moins une rangée d'une matrice pour une compression.
